# EUROPEAN PATENT SPECIFICATION

(11) **EP 3 235 741 B1**
(45) Date of publication and mention of the grant of the patent: **29.01.2020**
(21) Application number: 17167605.9
(22) Date of filing: 21.04.2017
(51) Int. Cl.: B65B 31/02, B65B 59/02, B65B 7/16

(54) **DEVICE FOR PACKAGING TRAYS**
VORRICHTUNG ZUM VERPACKEN VON TRAYS
DISPOSITIF POUR CONDITIONNER DES BARQUETTES D'EMBALLAGE

(30) Priority: 22.04.2016 IT UA20162809
(43) Date of publication of application: 25.10.2017
(73) Proprietor: Scolaro, Mauro, 20063 Cernusco sul Naviglio (MI) (IT)
(72) Inventor: Scolaro, Mauro, 20063 Cernusco sul Naviglio (MI) (IT)
(74) Representative: Modiano, Micaela Nadia

(56) References cited:
- US-A1- 2013 263 559

## Description

The present invention relates to a device for packaging trays containing food products or the like.

In the sector of packaging food trays, heat-sealing machines are known which perform, generally in vacuum bells or in a controlled atmosphere, the heat-sealing of a film on the rim of a tray containing the food product and then trim the film that has been heat-sealed on the rim of the tray, by way of a die punch or other cutting means.

In the above heat-sealing operation, the tray is generally accommodated in a lower seat, or die, and an upper heat-sealing plate, with substantially identical shape and dimensions to those of the tray to be heat-sealed, is brought proximate to and pressed against the rim of the tray, so that the film interposed between the tray and the upper plate is heat-sealed at the rim of the tray.

Such conventional machines have the drawback that they are machines dedicated to one specific type of tray, in terms of dimensions and/or format, and therefore they are difficult to modify in order to process trays of different dimensions and/or formats, except by substituting the lower die, the heat-sealing plate, and the die cutter.

In order to overcome this drawback, heat-sealing machines have been devised that are provided with a plurality of lower dies of different dimensions, which can be selected as a function of the dimensions and format of the tray to be processed.

However, even the above mentioned heat-sealing machines are not devoid of drawbacks since the variety of trays that can be processed is greatly limited by the fact that the heating plate, arranged above the die, and the die cutter, associated with the die, cannot collide with each other, as otherwise the heat-sealing and/or the cutting of the film flush with the tray would be compromised.

In substance therefore, although such machines can mount lower dies
that can accommodate different tray formats, where such dies are provided with die cutters that are adapted to cut the film flush of the rim of the tray, the dies, and the die cutters, must be of a size and shape that they do not interfere with the heat-sealing plate, and this greatly limits the number of formats and the dimensions of the trays that can be processed with such a heat-sealing machine.

Furthermore such heat-sealing machines suffer from the drawback that they cannot be used for "vacuum/gas" heat-sealing, i.e. heat-sealing that makes it possible to simultaneously obtain vacuum inside the packaged tray and the introduction of gas in required percentages.

Furthermore such heat-sealing machines also suffer from the drawback that they cannot be used for the kind of vacuum packaging known as "skin packaging", where the thermoplastic film is deformed on the food product, creating a "skin effect".

US 2013/263559 discloses a device for packaging trays, which comprises a plurality of receptacles to accommodate trays of different dimensions, and a corresponding plurality of upper bell-shaped elements.

The aim of the present invention consists in providing a packaging device that overcomes the drawbacks of the known art by making it possible to package food trays without limitations on dimensions and/or formats.

Within this aim, an object of the present invention is to provide a packaging device that also makes it possible to perform "vacuum/gas" heat-sealing and "skin" heat-sealing.

Another object of the invention is to provide a packaging device that is particularly simple in operation, and which can be used by an operator with no special training.

Another object of the invention is to provide a packaging device that makes it possible to avoid unwanted machine shutdowns and "dead" times for the substitution of dies, die cutters, and heat-sealing plates.

Another object of the invention consists in providing a packaging device that is capable of offering the widest guarantees of reliability and safety in use.

This aim and these and other objects which will become better apparent hereinafter are achieved by a packaging device according to claim 1.

Further characteristics and advantages of the invention will become better apparent from the detailed description of a preferred, but not exclusive, embodiment of a packaging device, which is illustrated by way of non-limiting example with the aid of the accompanying drawings wherein:

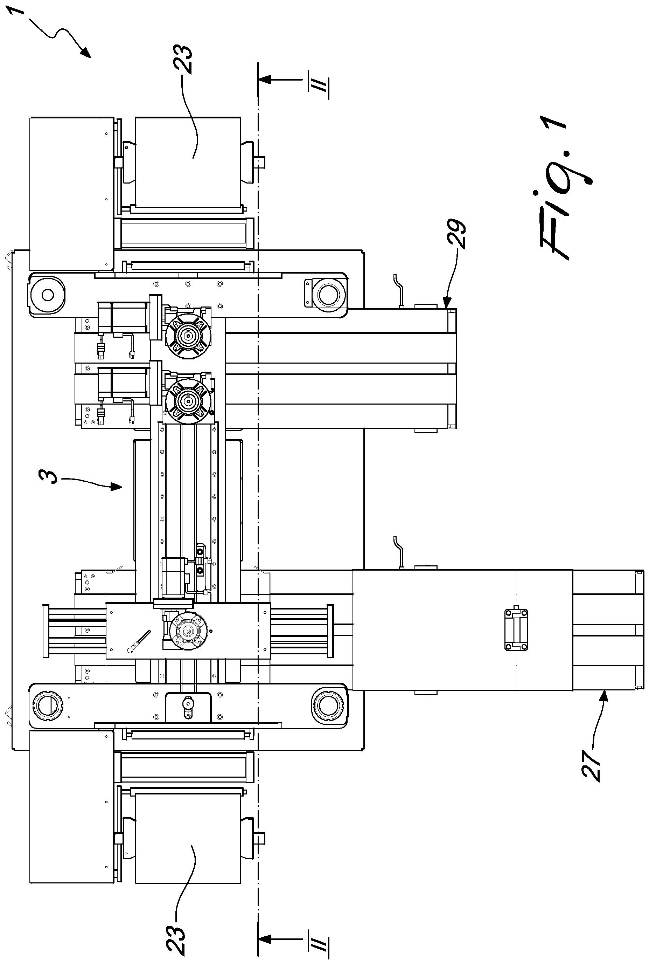

Figure 1 is a plan view from above of an embodiment of a packaging device according to the invention;
Figure 2 is a cross-sectional view of the packaging device shown in Figure 1 taken along the line II-II, in a first configuration for use;
Figure 3 is a cross-sectional view of the packaging device shown in Figure 1 taken along the line II-II, in a second configuration for use;
Figures 4 to 6 schematically illustrate three different arrangements of the processing stations of the packaging device according to the invention;
Figures 7 to 12 illustrate a sequence of steps of "skin packaging" a tray, carried out by the packaging device according to the invention.

With reference to the figures, the packaging device, generally designated by the reference numeral 1, comprises a heat-sealing and cutting station 3 for heat-sealing a film 5 on the rim of a tray 7 and for cutting the film 5. The heat-sealing and cutting station 3 comprises a lower supporting surface 9 which comprises a plurality of receptacles 11, also called dies, which are configured to accommodate trays 7 of different dimensions and/or formats.

According to the invention, the heat-sealing and cutting station 3 comprises a plurality of upper bell-shaped elements 13 that are configured to engage with the trays 7 of different dimensions and/or formats, where the bells 13 are selectively associable with the receptacles 11 as a function of the dimensions and/or formats of the trays 7.

Advantageously each one of the bell-shaped elements 13 can be selectively associated with one of the receptacles 11 so as to define a chamber 15.

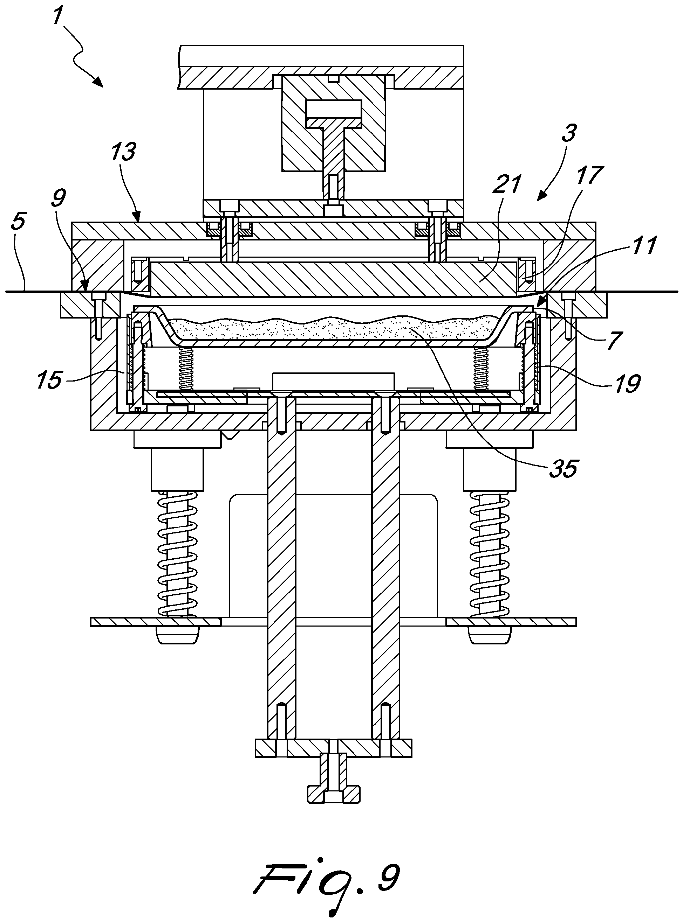

Figures 9 to 12 illustrate some operating configurations of the heat-sealing and cutting station 3, in which the bell-shaped element 13 and the receptacle 11 face each other so as to define the chamber 15.

The device 1 can further comprise vacuum generation means that are adapted to create a condition of vacuum inside the chamber 15.

The bell-shaped element 13 advantageously comprises a heat-sealing profile 17 that is adapted to heat-seal the film 5 on the rim of the tray 7.

The receptacle 11 advantageously comprises cutting means 19, such as for example a die cutter, adapted to cut the film 5 around the rim of the tray 7.

The bell-shaped element 13 advantageously comprises a heating plate 21 that can move axially with respect to the bell-shaped element 13 and which is adapted to heat an area of the film 5.

As explained below, the heating plate 21 can move toward an area of the film 5 in order to heat the area of the film 5 that will then be deformed by virtue of the vacuum created in the chamber 15 in order to adhere to the contents of the tray 7 and achieve the "skin packaging" effect.

The device 1 can comprise a station for measuring the dimensions and/or the format of the tray 7, which is arranged upstream of the heat-sealing and cutting station 3, where the detection of the measurement of the dimensions and/or of the format of the tray 7 determine the selection of one of the receptacles 11 and of one of the bell-shaped elements 13 and their mutual pairing.

In substance, therefore, as a function of the dimensions and/or format of the tray 7 to be packaged, a particular pairing of bell-shaped element 13 and receptacle 11 is selected such as to allow the packaging of the specific tray 7.

The device 1 can comprise at least one spool 23 for feeding the film 5, and the detection of the measurement the dimensions and/or of the format of the tray 7 by the measurement station determine the length of film 5 to be fed from the spool 23 to the heat-sealing and cutting station 3.

In substance therefore, the advancement of the film 5 can be substantially equal to the length of the tray 7 to be packaged, so as to reduce the discarded film 5 to the minimum.

Advantageously the device 1 comprises a plurality of spools 23 for supplying film 5 of different formats and/or dimensions, where the film 5 for packaging a tray 7 can be fed by one of the spools 23 to the heat-sealing and cutting station 3 as a function of the dimensions and/or of the formats of the trays 7. In this manner, by selecting the format of film 5 that is best adapted to cover the tray 7 to be packaged, the film 5 discarded owing to cutting off portions that extend over the rims of the tray 7 is further reduced.

The device 1 further comprises advantageously the grip means 25 which are adapted to grip the tray 7 in order to guide it into the heat-sealing and cutting station 3.

Advantageously the grip means 25 can comprise a pair of elements that can move toward each other in order to grip a tray 7.

The grip means 25 can grip and entrain a first tray and simultaneously push a second tray.

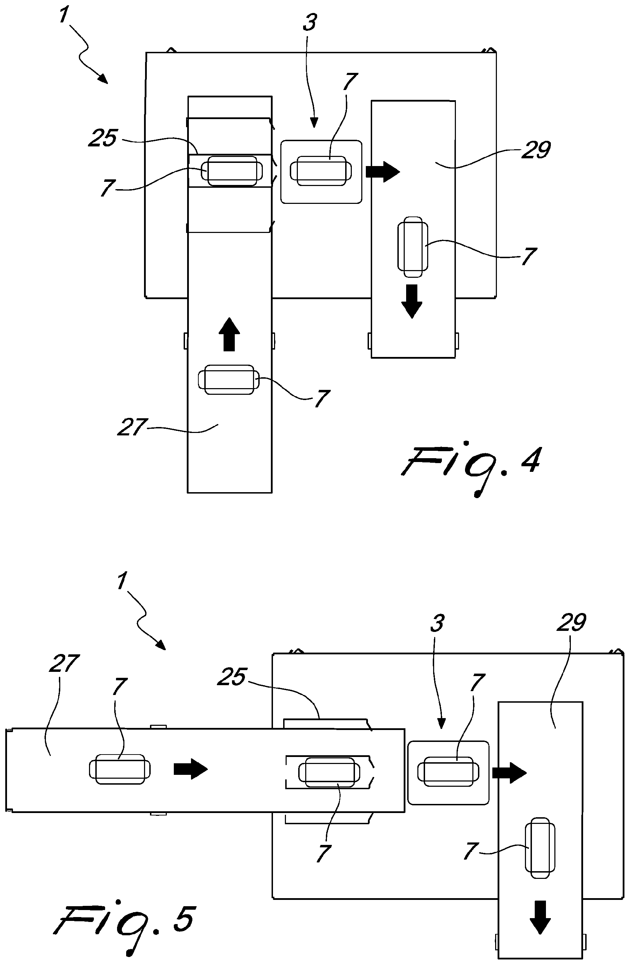

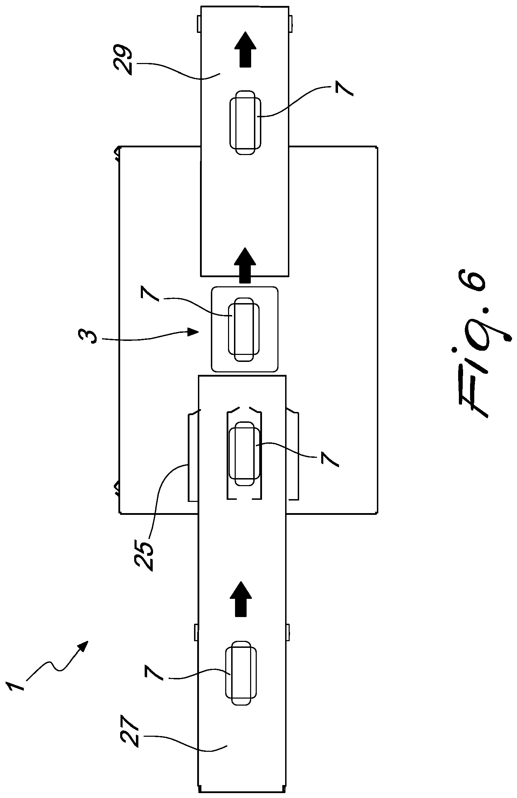

The device 1 for packaging trays 7 advantageously comprises first means 27 for conveying the trays 7, in input to the heat-sealing and cutting station 3, and second means 29 for conveying the trays 7, in output from the heat-sealing and cutting station 3. The first conveyance means 27 and the second conveyance means 29 can be associated with the device 1 according to a plurality of mutually different configurations, as illustrated in the three examples in Figures 4, 5 and 6.

Advantageously, the grip means 25 are configured to entrain a first tray 7 from the first conveyance means 27 to the heat-sealing and cutting station 3 and simultaneously to push a second tray 7 from the heat-sealing and cutting station 3 to the second conveyance means 29.

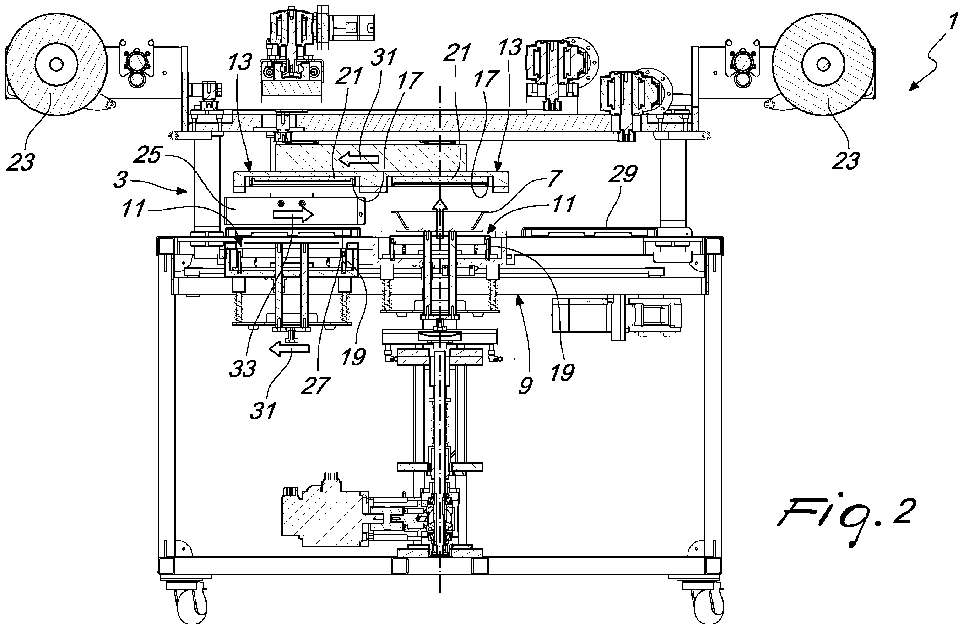

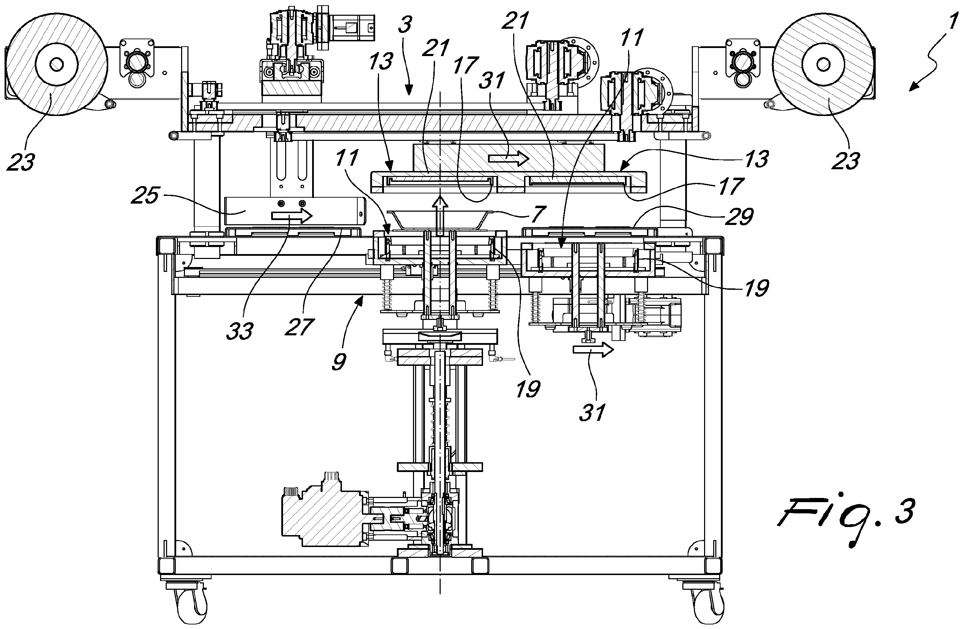

Figures 2 and 3 illustrate a device 1 that comprises a pair of receptacles 11 and a pair of upper bell-shaped elements 13. The receptacles 11 and the bell-shaped elements 13 can be moved in a horizontal plane, as indicated by the arrows 31, so as to be conveniently arranged at the work area of the tray 7 as a function of the format and/or of the dimensions of the tray 7.

For example, the configuration shown in Figure 2 is adapted to process trays 7 of smaller formats, since the receptacle 11 and the bell-shaped element 13 have shapes and dimensions that are such as to allow the processing of smaller trays 7.

The configuration shown in Figure 3 is adapted to process trays 7 of larger formats.

Depending on the dimensions and/or the format of the tray 7 to be processed, the heat-sealing and cutting station 3 is moved on the horizontal plane so as to bring the receptacle 11 / bell 13 pair adapted to process the tray 7 to the processing area.

Simultaneously, the format of the film 5 to be used can also be selected, supplying the film 5 from one of the different spools 23.

Operation of the device for packaging trays is clear and evident from the foregoing description.

A tray 7 to be packaged is brought to the heat-sealing and cutting station 3 by way of the first conveyance means 27, such as for example a conveyor belt.

On the basis of the detected format of the tray 7, the pair of receptacle 11 and bell-shaped element 13 best adapted to packaging the tray is selected, and such pair of elements is aligned with the processing area.

Furthermore, based on the format of the tray 7 that is detected by the measurement station, the spool 23 that carries the film 5 that has the format best adapted for packaging the tray 7 is also selected.

In addition, based on the format of the tray 7 that is detected, a precise advancement of the film 5 on the tray 7 is set.

Advantageously the advancement of the film 5 can be done using the movement of the upper bell-shaped element 13. For example the film 5 of a spool 23 can be associated with and locked to the corresponding upper bell-shaped element 13. When the bell-shaped element 13 is brought to the area for processing the tray 7, it entrains with it the film 5 for a length that substantially corresponds to the length of the tray 7.

The grip means 25 grip the tray 7 and bring it to the work area, as indicated by the arrow 33, at the selected receptacle 11 and bell-shaped element 13, where the packaging is carried out, as better described below.

Once the packaging of the tray 7 is done, the grip means 25 grip a new tray and bring it to the work area, and at the same time they push the tray that has just been processed toward the second conveyance means 29, such as for example a conveyor belt.

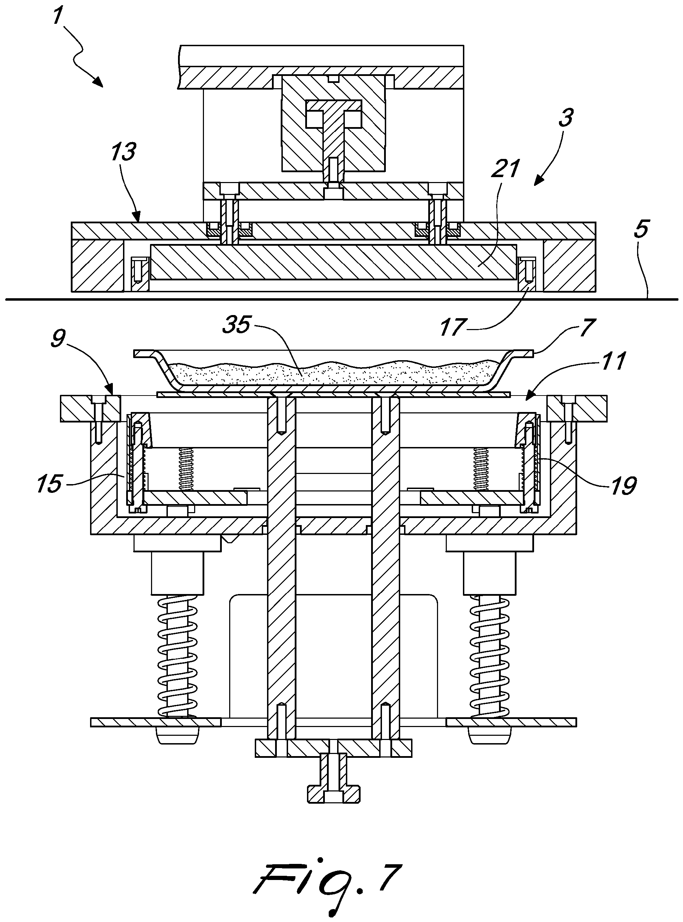

Figures 7 to 12 illustrate more specifically the sequence of operations that occurs in the step of heat-sealing and cutting of the film 5 to the tray 7, for the type of packaging known as "skin packaging".

Figure 7 shows the initial configuration. The film 5 is interposed between the receptacle 11 and the bell-shaped element 13, above the tray 7.

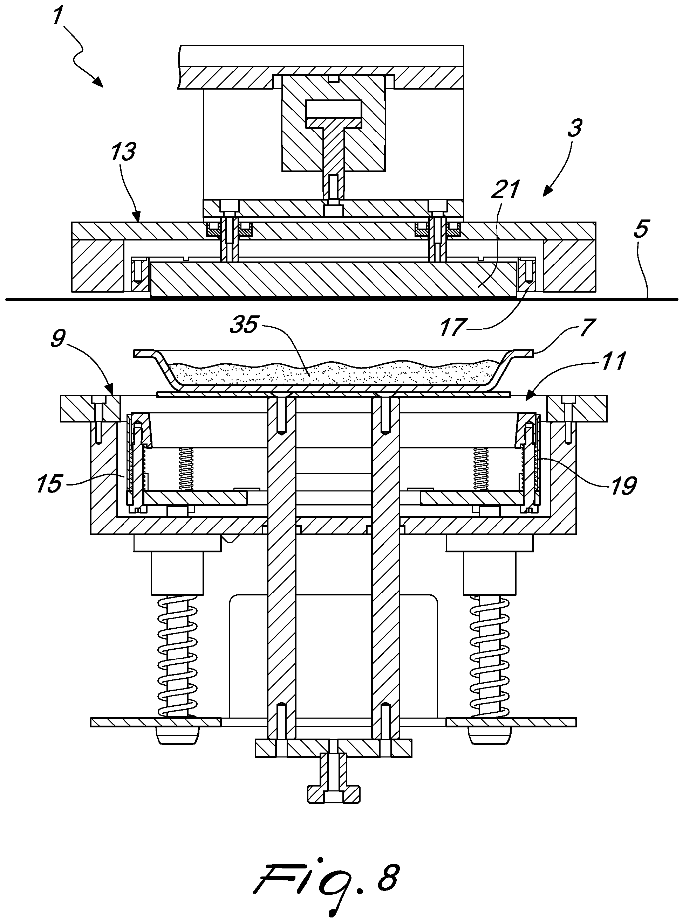

Figure 8 illustrates the step in which the heating plate 21 is thrust downward so as to protrude externally with respect to the bell-shaped element 13 and with respect to the heat-sealing profile 17.

Figure 9 illustrates the step of lowering the bell-shaped element 13 until the heating plate 21 comes into contact with the film 5 and heats the central area thereof. The film 5, which in "skin" packaging is made of a thermoplastic material, is brought to the temperature of plastic deformation.

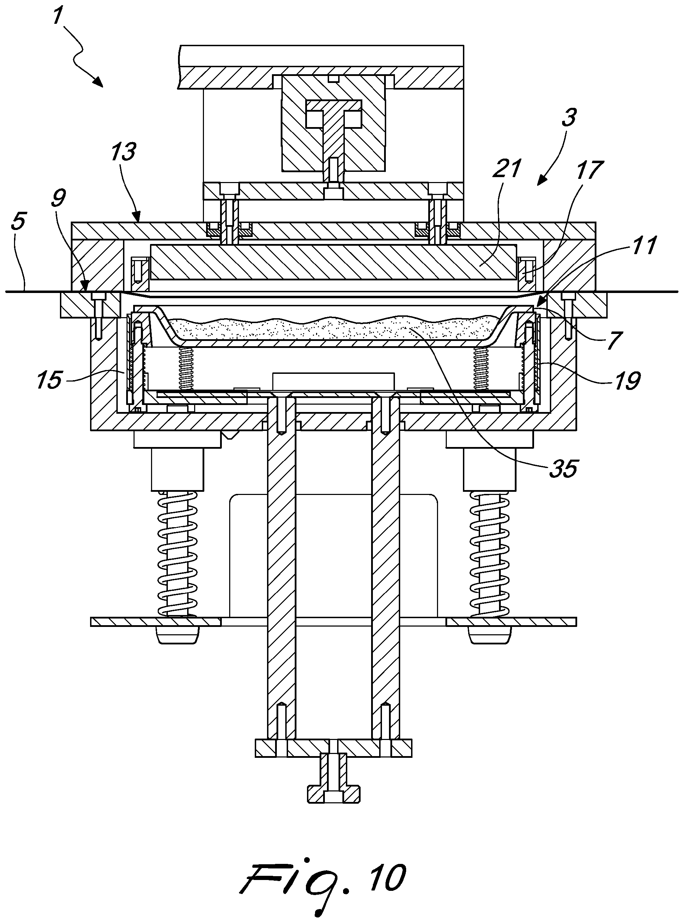

Subsequently, as shown in Figure 10, the heating plate 21 returns to its inactive position, inside the bell-shaped element 13.

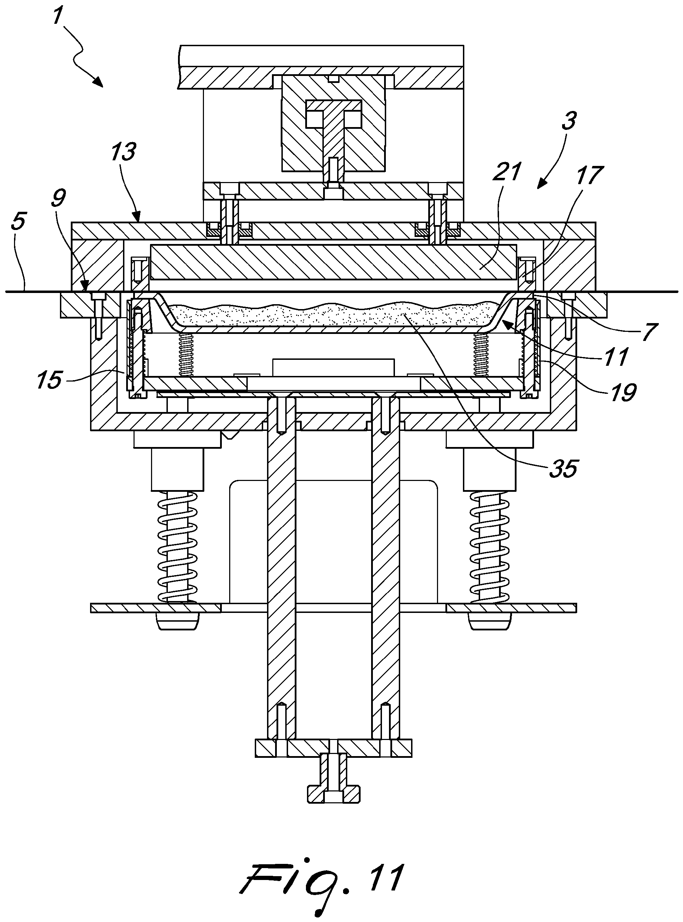

In this configuration, as illustrated in the subsequent Figure 11, the tray 7 is raised, by virtue of lifting means present in the receptacle 11, so that its rim comes into contact with the heat-sealing rim 17 of the bell-shaped element 13

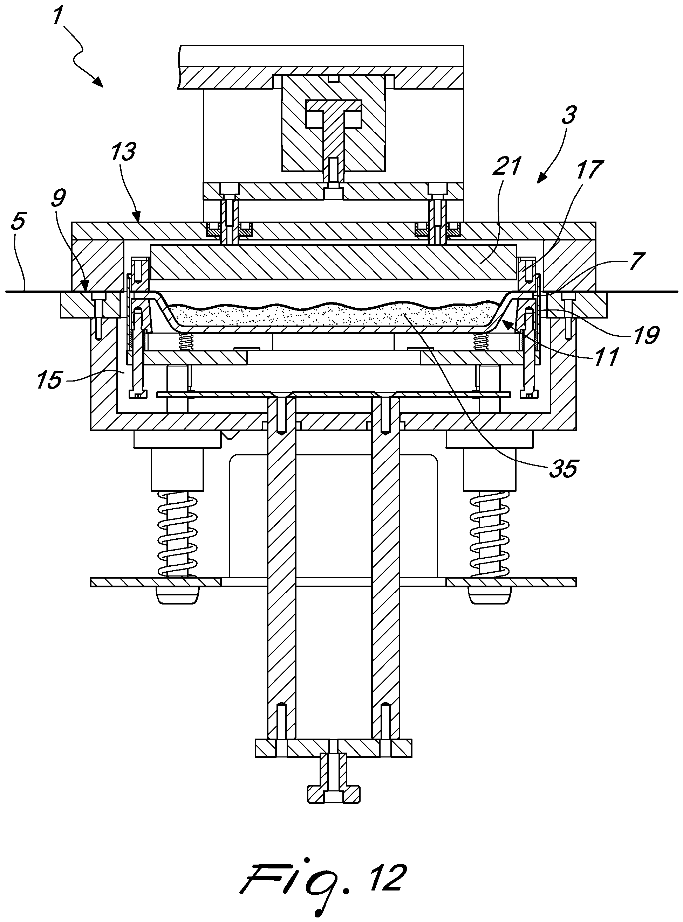

Figure 12 illustrates the step in which a vacuum is created in the chamber 15 defined by the bell-shaped element 13 and by the receptacle 11.

In this step the film 5 is heat-sealed to the rim of the tray 7, by virtue of the heating of the heat-sealing profile 17. In this configuration the cutting means 19 are also activated and trim the film 5 around the rim of the tray 7.

Subsequently air is allowed back into the chamber 15, and this causes the deformation of the film 5, which was previously heated by the heating plate 21, and which adheres to the content 35 of the tray 7 and creates the "skin effect".

For packaging by heat-sealing alone, or for packaging by vacuum/gas heat-sealing, the heating plate 21 always remains in the inactive position and is never heated, while the steps of heat-sealing and perimetric cutting, and optionally of creating the vacuum with introduction of gas, are carried out in an entirely similar manner.

In practice it has been found that the device for packaging trays according to the present invention achieves the intended aim and objects since it makes it possible to process trays of different formats and/or dimensions without having to intervene on the components of the device proper and without having to substitute any component.

Another advantage of the device according to the invention consists in being able to carry out simple heat-sealing, vacuum/gas heat-sealing, and heat-sealing with the "skin effect".

Another advantage of the device according to the invention consists in that it minimizes the discarded packaging film.

Another advantage of the device according to the invention consists in that it has no limitations on the tray formats that can be processed with the device.

The device for packaging trays thus conceived is susceptible of numerous modifications and variations, all of which are within the scope of the appended claims.

Moreover, all the details may be substituted by other, technically equivalent elements.

In practice the materials employed, provided they are compatible with the specific use, and the contingent dimensions and shapes, may be any according to requirements and to the state of the art.

The Italian patent application no. 102016000041589 (UB2016A002809) is the priority document of the present application.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A device (1) for packaging trays, which comprises a heat-sealing and cutting station (3) for heat-sealing a film (5) on the rim of a tray (7) and for cutting said film (5), said heat-sealing and cutting station (3) comprising a lower supporting surface (9) which comprises a plurality of receptacles (11) configured to accommodate trays (7) of different dimensions and/or formats, said heat-sealing and cutting station (3) comprising a plurality of upper bell-shaped elements (13) that are configured to engage with said trays (7) of different dimensions and/or formats, said bell-shaped elements (13) being selectively associable with said receptacles (11) as a function of the dimensions and/or formats of said trays (7), **characterized in that** said heat-sealing and cutting station (3) moves in a a horizontal plane so as to bring a pail uf receptacle (11) and bell-shaped element (13) pair associated with a tray (7) into alignment in the processing area.

2. The packaging device (1) according to claim 1, **characterized in that** each one of said bell-shaped elements (13) is selectively associable with one of said receptacles (11) so as to form a chamber (15), said device (1) comprising vacuum generation means adapted to generate a condition of vacuum inside said chamber (15).

3. The packaging device (1) according to claim 1 or 2, **characterized in that** said bell-shaped element (13) comprises a heat-sealing profile (17) that is adapted to heat-seal said film (5) onto the rim of said tray (7) and **in that** said receptacle (11) comprises cutting means (19) adapted to cut said film (5) around the rim of said tray (7).

4. The packaging device (1) according to one or more of the preceding claims, **characterized in that** said bell-shaped element (13) comprises a heating plate (21), said heating plate (21) being axially movable with respect to said bell-shaped element (13) and being adapted to heat an area of said film (5).

5. The packaging device (1) according to one or more of the preceding claims, **characterized in that** it comprises a station for measuring the dimensions and/or the format of said tray (7), which is arranged upstream of said heat-sealing and cutting station (3), the detection of the measurement of the dimensions and/or of the format of said tray (7) determining the selection of one of said receptacles (11) and of one of said bell-shaped elements (13) and their mutual pairing.

6. The packaging device (1) according to one or more of the preceding claims, **characterized in that** it comprises a station for measuring the dimensions and/or the format of said tray (7), which is arranged upstream of said heat-sealing and cutting station (3), and **in that** it comprises at least one spool (23) for feeding said film (5), the detection of the measurement of the dimensions and/or of the format of said tray (7) determining the length of said film (5) to be fed from said spool (23) to said heat-sealing and cutting station (3).

7. The packaging device (1) according to one or more of the preceding claims, **characterized in that** it comprises a plurality of spools (23) for feeding film (5) of different formats and/or dimensions, said film (5) being feedable from one of said spools (23) to said heat-sealing and cutting station (3) as a function of the dimensions and/or formats of said trays (7).

8. The packaging device (1) according to one or more of the preceding claims, **characterized in that** it comprises grip means (25) adapted to grip said tray (7) in order to guide it into said heat-sealing and cutting station (3).

9. The packaging device (1) according to one or more of the preceding claims, **characterized in that** it comprises first means (27) for conveying said trays (7), in input to said heat-sealing and cutting station (3), and second means (29) for conveying said trays (7), in output from said heat-sealing and cutting station (3), said first conveyance means (27) and said second conveyance means (29) being associable with said device (1) according to a plurality of mutually different configurations.

10. The packaging device (1) according to one or more of the preceding claims, **characterized in that** said grip means (25) are configured to entrain a first tray (7) from said first transport means (27) to said heat-sealing and cutting station (3) and simultaneously to push a second tray (7) from said heat-sealing and cutting station (3) to said second conveyance means (29).

## Patentansprüche

1. Eine Vorrichtung (1) zum Verpacken von Trays, die eine Wärmeversiegelungs- und Schneidestation (3) zum Wärmeversiegeln einer Folie (5) am Rand eines Trays (7) und zum Schneiden der Folie (5) umfasst; wobei die Wärmeversiegelungs- und Schneidestation (3) eine untere Stützfläche (9) umfasst, die eine Vielzahl von Sitzen (11) umfasst, ausgebildet, um Trays (7) verschiedener Abmessungen und/oder Formate aufzunehmen, wobei die Wärmeversiegelungs- und Schneidestation (3) eine Vielzahl oberer glockenförmiger Elemente (13) umfasst, welche ausgebildet sind, um die Trays (7) verschiedener Abmessungen und/oder Formate zu halten; wobei die glockenförmigen Elemente (13) wahlweise in Abhängigkeit von den Abmessungen und/oder Formaten der Trays (7) mit den Sitzen (11) verbunden werden können; **dadurch gekennzeichnet, dass** die Wärmeversiegelungs- und Schneidestation (3) sich auf einer horizontalen Ebene bewegt, um ein mit einem Tray (7) verbundenes Paar aus einem Sitz (11) und einem glockenförmigen Element (13) im Verarbeitungsbereich in Ausrichtung zu bringen.

2. Die Verpackungsvorrichtung (1) gemäß Anspruch 1, **dadurch gekennzeichnet, dass** jedes der glockenförmigen Elemente (13) wahlweise mit einem der Sitze (11) verbunden werden kann, um eine Kammer (15) zu bilden, wobei die Vorrichtung (1) Vakuumerzeugungsmittel umfasst, ausgebildet, um einen Zustand des Vakuums innerhalb der Kammer (15) herzustellen.

3. Die Verpackungsvorrichtung (1) gemäß Anspruch 1 oder 2, **dadurch gekennzeichnet, dass** das glockenförmige Element (13) ein Wärmeversiegelungsprofil (17) umfasst, das ausgebildet ist, um die Folie (5) mit dem Rand des Trays (7) wärmezuversiegeln, und dadurch, dass der Sitz (11) Schneidemittel (19) umfasst, ausgebildet, um die Folie (5) um den Rand des Trays (7) herum zu schneiden.

4. Die Verpackungsvorrichtung (1) gemäß einem oder mehreren der obigen Ansprüche, **dadurch gekennzeichnet, dass** das glockenförmige Element (13) eine Heizplatte (21) umfasst, wobei die Heizplatte (21) im Verhältnis zu dem glockenförmigen Element (13) axial beweglich und ausgebildet ist, um einen Bereich der Folie (5) zu erhitzen.

5. Die Verpackungsvorrichtung (1) gemäß einem oder mehreren der obigen Ansprüche, **dadurch gekennzeichnet, dass** sie eine Station zum Messen der Abmessungen und/oder des Formats des Trays (7) umfasst, die stromaufwärts von der Wärmeversiegelungs- und Schneidestation (3) angeordnet ist, wobei die Erfassung der Messung der Abmessungen und/oder des Formats des Trays (7) die Auswahl eines der Sitze (11) und eines der glockenförmigen Elemente (13) und ihre Zuordnung zueinander bestimmt.

6. Die Verpackungsvorrichtung (1) gemäß einem oder mehreren der obigen Ansprüche, **dadurch gekennzeichnet, dass** sie eine Station zum Messen der Abmessungen und/oder des Formats des Trays (7) umfasst, die stromaufwärts von der Wärmeversiegelungs- und Schneidestation (3) angeordnet ist, und dadurch, dass sie mindestens eine Spule (23) zum Zuführen der Folie (5) umfasst, wobei die Erfassung der Messung der Abmessungen und/oder des Formats des Trays (7) die Länge der Folie (5) bestimmt, die von der Spule (23) der Wärmeversiegelungs- und Schneidestation (3) zugeführt werden soll.

7. Die Verpackungsvorrichtung (1) gemäß einem oder mehreren der obigen Ansprüche, **dadurch gekennzeichnet, dass** sie eine Vielzahl von Spulen (23) zum Zuführen von Folien (5) verschiedener Formate und/oder Abmessungen umfasst, wobei die Folie (5) von einer der Spulen (23) in Abhängigkeit von den Abmessungen und/oder Formaten der Trays (7) der Wärmeversiegelungs- und Schneidestation (3) zugeführt werden kann.

8. Die Verpackungsvorrichtung (1) gemäß einem oder mehreren der obigen Ansprüche, **dadurch gekennzeichnet, dass** sie Greifmittel (25) umfasst, ausgebildet, um das Tray (7) zu greifen, um es in die Wärmeversiegelungs- und Schneidestation (3) zu führen.

9. Die Verpackungsvorrichtung (1) gemäß einem oder mehreren der obigen Ansprüche, **dadurch gekennzeichnet, dass** sie erste Mittel (27) zum Befördern der Trays (7) am Eingang zu der Wärmeversiegelungs- und Schneidestation (3) und zweite Mittel (29) zum Befördern der Trays (7) am Ausgang von der Wärmeversiegelungs- und Schneidestation (3) umfasst, wobei die ersten Beförderungsmittel (27) und die zweiten Beförderungsmittel (29) in einer Vielzahl voneinander verschiedener Anordnungen mit der Vorrichtung (1) verbunden werden können.

10. Die Verpackungsvorrichtung (1) gemäß einem oder mehreren der obigen Ansprüche, **dadurch gekennzeichnet, dass** die Greifmittel (25) ausgebildet sind, um ein erstes Tray (7) von den ersten Beförderungsmitteln (27) zu der Wärmeversiegelungs- und Schneidestation (3) mitzunehmen und gleichzeitig ein zweites Tray (7) von der Wärmeversiegelungs- und Schneidestation (3) zu den zweiten Beförderungsmitteln (29) zu schieben.

## Revendications

1. Dispositif (1) pour conditionner des barquettes, comprenant une station de thermoscellage et de coupe (3) pour thermosouder un film (5) sur le rebord d'une barquette (7) et pour couper ledit film (5), ladite station de thermoscellage et de coupe (3) comprenant une surface de support inférieure (9) qui comprend une pluralité de réceptacles (11) configurés pour recevoir des barquettes (7) de différentes dimensions et/ou formats, ladite station de thermoscellage et de coupe (3) comprenant une pluralité d'éléments supérieurs en forme de cloche (13) qui sont configurés pour se mettre en prise avec lesdites barquettes (7) de différentes dimensions et/ou formats, lesdits éléments en forme de cloche (13) pouvant être associés de façon sélective auxdits réceptacles (11) en fonction des dimensions et/ou formats desdites barquettes (7), **caractérisé en ce que** ladite station de thermoscellage et de coupe (3) se déplace dans un plan horizontal afin d'aligner une paire d'un réceptacle (11) et d'un élément en forme de cloche (13) associée à une barquette (7) dans la zone de traitement.

2. Dispositif de conditionnement (1) selon la revendication 1, **caractérisé en ce que** chacun desdits éléments en forme de cloche (13) peut être associé de façon sélective à l'un desdits réceptacles (11) afin de former une chambre (15), ledit dispositif (1) comprenant un moyen de génération de vide adapté pour produire une condition de vide à l'intérieur de ladite chambre (15).

3. Dispositif de conditionnement (1) selon la revendication 1 ou 2, **caractérisé en ce que** ledit élément en forme de cloche (13) comprend un profil de thermoscellage (17) qui est adapté pour thermosouder ledit film (5) sur le rebord de ladite barquette (7) et **en ce que** ledit réceptacle (11) comprend un moyen de coupe (19) adapté pour couper ledit film (5) autour du rebord de ladite barquette (7).

4. Dispositif de conditionnement (1) selon l'une ou plusieurs des revendications précédentes, **caractérisé en ce que** ledit élément en forme de cloche (13) comprend une plaque chauffante (21), ladite plaque chauffante (21) étant mobile axialement par rapport audit élément en forme de cloche (13) et étant adaptée pour chauffer une région dudit film (5).

5. Dispositif de conditionnement (1) selon l'une ou plusieurs des revendications précédentes, **caractérisé en ce qu'**il comprend une station pour mesurer les dimensions et/ou le format de ladite barquette (7), qui est placée en amont de ladite station de thermoscellage et de coupe (3), la détection de la mesure des dimensions et/ou du format de ladite barquette (7) déterminant la sélection de l'un desdits réceptacles (11) et de l'un desdits éléments en forme de cloche (13) et leur appariement mutuel.

6. Dispositif de conditionnement (1) selon l'une ou plusieurs des revendications précédentes, **caractérisé en ce qu'**il comprend une station pour mesurer les dimensions et/ou le format de ladite barquette (7), qui est placée en amont de ladite station de thermoscellage et de coupe (3), et **en ce qu'**il comprend au moins une bobine (23) pour distribuer ledit film (5), la détection de la mesure des dimensions et/ou du format de ladite barquette (7) déterminant la longueur dudit film (5) devant être fournie par ladite bobine (23) à ladite station de thermoscellage et de coupe (3).

7. Dispositif de conditionnement (1) selon l'une ou plusieurs des revendications précédentes, **caractérisé en ce qu'**il comprend une pluralité de bobines (23) pour distribuer du film (5) de différents formats et/ou dimensions, ledit film (5) pouvant être fourni par l'une desdites bobines (23) à ladite station de thermoscellage et de coupe (3) en fonction des dimensions et/ou du format desdites barquettes (7).

8. Dispositif de conditionnement (1) selon l'une ou plusieurs des revendications précédentes, **caractérisé en ce qu'**il comprend un moyen de préhension (25) adapté pour saisir ladite barquette (7) afin de la guider pour la faire entrer dans ladite station de thermoscellage et de coupe (3).

9. Dispositif de conditionnement (1) selon l'une ou plusieurs des revendications précédentes, **caractérisé en ce qu'**il comprend un premier moyen (27) pour transporter lesdites barquettes (7), à l'entrée de ladite station de thermoscellage et de coupe (3), et un deuxième moyen (29) pour transporter lesdites barquettes (7), à la sortie de ladite station de thermoscellage et de coupe (3), ledit premier moyen de transport (27) et ledit deuxième moyen de transport (29) pouvant être associés audit dispositif (1) selon une pluralité de configurations mutuellement différentes.

10. Dispositif de conditionnement (1) selon l'une ou plusieurs des revendications précédentes, **caractérisé en ce que** ledit moyen de préhension (25) est configuré pour entraîner une première barquette (7) dudit premier moyen de transport (27) à ladite station de thermoscellage et de coupe (3) et simultanément pour pousser une deuxième barquette (7) de ladite station de thermoscellage et de coupe (3) audit deuxième moyen de transport (29).
